# EUROPEAN PATENT APPLICATION

(11) **EP 4 550 506 A2**
(43) Date of publication of application: **07.05.2025**
(21) Application number: 24207749.3
(22) Date of filing: 21.10.2024
(51) Int. Cl.: H01M 10/0562

(54) **DEFORMABLE HALIDE IONIC CONDUCTORS FOR USE AS ANOLYTES, CATHOLYTES OR SOLID ELECTROLYTES IN SOLID STATE BATTERIES**

(30) Priority: 01.11.2023 US 202363546793 P; 12.02.2024 US 202418439357
(71) Applicant: Samsung Electronics Co., Ltd., Suwon-si, Gyeonggi-do 16677 (KR)
(72) Inventor: LACIVITA, Valentina, San Jose, CA, 95134 (US); CROSS, Samuel, San Jose, CA, 95134 (US); WANG, Yan, San Jose, CA, 95134 (US); SHIN, Yongwoo, San Jose, CA, 95134 (US)
(74) Representative: Kuhnen & Wacker Patent- und Rechtsanwaltsbüro PartG mbB

(57) **Abstract**

A deformable halide-based ionic conductor has one of the following formulas: NaLi₃I₄, NaLi₃Br₄, NaLi₃Cl₄, KLi₂F₃, Li₂HfF₆, Li₃AgI₄, Li₃SiB₃(ClF₃)₄, Li₃AgBr₄, Li₂ZnF₄ having a trigonal crystal structure with space group R-3, Li₃AgCl₄, or Li₂AgCl₃. A catholyte includes a deformable halide-based ionic conductor having one of the following formulas: CsLi₂Cl₃, wherein the CsLi₂Cl₃ has an orthorhombic crystal structure, KLi₂F₃, Li₂HfF₆, Li₃SiB₃(ClF₃)₄, Li₃AgBr₄, Li₂ZnF₄, Li₃AgCl₄, or Li₂AgCl₃. A solid electrolyte separator includes a deformable halide-based ionic conductor having one of the following formulas: CsLi₂Cl₃, wherein the CsLi₂Cl₃ has an orthorhombic crystal structure, NaLi₃I₄, NaLi₃Br₄, NaLi₃Cl₄, KLi₂F₃, Li₂HfF₆, Li₃AgI₄, Li₃SiB₃(ClF₃)₄, Li₃AgBr₄, Li₂ZnF₄, Li₃AgCl₄, or Li₂AgCl₃. A solid state battery includes an anode, a cathode, and a solid electrolyte separator including a deformable halide-based ionic conductor having one of the following formulas: CsLi₂Cl₃, wherein the CsLi₂Cl₃ has an orthorhombic crystal structure, NaLi₃I₄, NaLi₃Br₄, NaLi₃Cl₄, KLi₂F₃, Li₂HfF₆, Li₃AgI₄, Li₃SiB₃(ClF₃)₄, Li₃AgBr₄, Li₂ZnF₄, Li₃AgCl₄, or Li₂AgCl₃.

## Description

### BACKGROUND

### 1. Field

Materials according to embodiments relate to ionic conductors for use as anolytes, catholytes or solid electrolytes in Li solid-state batteries.

### 2. Description of the Related Art

The field of battery research is in the midst of a paradigm shift from conventional liquid electrolyte systems to all-solid-state batteries (SSBs) with solid state electrolytes (SEs), owing to their high safety and potentially large volumetric energy density by enabling both the use of lithium metal anodes and the bipolar stacking of electrodes.

This transition brings a significant change in the kinetics of interfacial electrochemistry governing the battery performance because of the rigid solid-solid interface between active materials and SE in SSBs. In a typical liquid electrolyte cell, the active material surface is completely covered by the fluidic electrolyte, whereas a solid electrolyte forms a point contact with the active material due to its intrinsically rigid nature, thereby inducing sluggish charge transfer and mass transport kinetics at the interface. Thus, to achieve SSBs, an important prerequisite is forming and maintaining a well-defined solid-solid interface with intimate contact between the SE and cathode/anode active materials during electrochemical cycling.

Recently, halide ionic conductors, particularly chlorides, were raised as a promising class of solid electrolytes. They are ionically conductive and easily deformable like sulfides, but they do not suffer from the same poor oxidative stability of sulfides. The oxidation potential of chlorides and fluorides is generally much higher (comparable to oxides), leading to an excellent compatibility with 4V-class cathodes.

However, there are problems with some embodiments, including the following:
- A core issue of SSBs is the mechanical, chemical, and electrochemical compatibility of SEs with electrodes. Non-conformal contact at the electrode-electrolyte interface has shown to limit the power density and induces dendrite formation.
- Current oxide SE systems that are considered promising candidates to be employed in SSBs (e.g., garnets) require additional engineering for intimate electrode-electrolyte contact, such as co-sintering, stack pressure, etc. However, these strategies seem inadequate to maintain physical integrity given the reversible volume change of electrodes upon electrochemical cycling.
- Sulfide SEs are highly conductive and easily deformable, but they suffer from limited oxidative stability, thus limiting the capacity of the SSB. While the electrochemical stability of sulfides might be extended by application of protective coatings against the cathode active material, new solid-solid coating/SE and coating/cathode interfaces are introduced, which might aggravate interface resistance and contact issues.

Information disclosed in this Background section has already been known to the inventors before achieving the disclosure of the present application or is technical information acquired in the process of achieving the disclosure. Therefore, it may contain information that does not form the prior art that is already known to the public.

### SUMMARY

An efficient Machine Learning (ML)-driven computational workflow for the design of new deformable SE materials has been devised as shown in the present disclosure.

Compounds with ML predicted hardness ≤ 2.5GPa (that is the calculated hardness of Li₃PS₄, here used as a reference) were computationally characterized using density-functional theory (DFT) calculations to identify thermodynamically stable compounds and to confirm their mechanical properties. Potential ionic conductor candidates were then sorted out using migration energy barriers estimated based on the empirical Bond Valence Sum method and in some cases also ab initio Molecular Dynamics (AIMD).

With the use of the computational screening described above, new deformable halide ionic conductors have been designed with good electrochemical stability against either Li metal or high voltage cathodes (or both), to be employed as anolytes or catholytes (or SEs), respectively.

Interface stability calculations show that some of the new compounds mentioned above are also chemically stable against commonly used oxide SEs, *i.e.*, Li₇La₃Zr₂O₁₂ (LLZO), and cathodes, *i.e.*, Li₃MnNiCoO₆ (NMC) and LiCoO₂ (LCO). The predicted chemical stability rules out side chemical reactions at the interface with such oxide phases, thus ensuring long cycle life of the SSB.

The materials in the present disclosure are newly designed compounds predicted to have favorable mechanical and (electro)chemical properties as well as high ionic conductivity.

An embodiment of the present disclosure includes a deformable halide-based ionic conductor having one of the following formulas:

NaLi₃I₄,

NaLi₃Br₄,

NaLi₃Cl₄,

KLi₂F₃,

Li₂HfF₆,

Li₃AgI₄,

Li₃SiB₃(ClF₃)₄,

Li₃AgBr₄,

Li₂ZnF₄,

wherein the Li₂ZnF₄ has a trigonal crystal structure with space group R-3,

Li₃AgCl₄, or

Li₂AgCl₃.

Another embodiment includes the aforementioned deformable halide-based ionic conductor, having one of the following formulas:

NaLi₃I₄,

NaLi₃Br₄,

NaLi₃Cl₄,

KLi₂F₃,

Li₂HfF₆,

Li₃AgI₄,

Li₃SiB₃(ClF₃)₄,

Li₃AgBr₄,

Li₃AgCl₄, or

Li₂AgCl₃.

Another embodiment includes a catholyte comprising a deformable halide-based ionic conductor having one of the following formulas:

CsLi₂Cl₃,

wherein the CsLi₂Cl₃ has an orthorhombic crystal structure,

KLi₂F₃,

Li₂HfF₆,

Li₃SiB₃(ClF₃)₄,

Li₃AgBr₄,

Li₂ZnF₄,

Li₃AgCl₄, or

Li₂AgCl₃.

Another embodiment includes the aforementioned catholyte, wherein the deformable halide-based ionic conductor has the formula CsLi₂Cl₃, wherein the CsLi₂Cl₃ has an orthorhombic crystal structure.

Another embodiment includes the aforementioned catholyte, wherein the deformable halide-based ionic conductor has the formula KLi₂F₃.

Another embodiment includes the aforementioned catholyte, wherein the deformable halide-based ionic conductor has the formula Li₂HfF₆.

Another embodiment includes the aforementioned catholyte, wherein the deformable halide-based ionic conductor has the formula Li₃SiB₃(ClF₃)₄.

Another embodiment includes the aforementioned catholyte, wherein the deformable halide-based ionic conductor has the formula Li₂ZnF₄.

Another embodiment includes a solid electrolyte separator comprising a deformable halide-based ionic conductor having one of the following formulas:

CsLi₂Cl₃,

wherein the CsLi₂Cl₃ has an orthorhombic crystal structure,

NaLi₃I₄,

NaLi₃Br₄,

NaLi₃Cl₄,

KLi₂F₃,

Li₂HfF₆,

Li₃AgI₄,

Li₃SiB₃(ClF₃)₄,

Li₃AgBr₄,

Li₂ZnF₄,

Li₃AgCl₄,

or

Li₂AgCl₃.

If needed, the deformable halide-based ionic conductor can be appropriately protected, e.g., by coating the electrode active materials For example, Li₃AgI₄ can be used as a solid electrolyte if appropriately protected, e.g., by coating the electrode active materials.

Another embodiment includes the aforementioned solid electrolyte separator, comprising a solid electrolyte having the formula CsLi₂Cl₃, wherein the CsLi₂Cl₃ has an orthorhombic crystal structure.

Another embodiment includes a solid state battery comprising an anode, a cathode, and a solid electrolyte separator, wherein the solid state battery comprises any aforementioned catholyte or any aforementioned solid electrolyte separator.

### BRIEF DESCRIPTION OF DRAWINGS

Example embodiments of the present disclosure will be more clearly understood from the following detailed description taken in conjunction with the accompanying drawings in which:
FIG. 1 is a graph showing the distribution of ML-predicted hardness for ~40,000 LiX+LiX'+MX" compositions.
FIG. 2 is a diagram showing the computational workflow for new deformable materials design.
FIG. 3 is a graph showing the ab initio Molecular Dynamics (AIMD) calculated ionic conductivity for CsLi₂Cl₃.

### DETAILED DESCRIPTION OF EXAMPLE EMBODIMENTS

The embodiments of the disclosure described herein are example embodiments, and thus, the disclosure is not limited thereto, and may be realized in various other forms. Each of the embodiments provided in the following description is not excluded from being associated with one or more features of another example or another embodiment also provided herein or not provided herein but consistent with the disclosure. For example, even if matters described in a specific example or embodiment are not described in a different example or embodiment thereto, the matters may be understood as being related to or combined with the different example or embodiment, unless otherwise mentioned in descriptions thereof.

As used herein, expressions such as "at least one of," when preceding a list of elements, modify the entire list of elements and do not modify the individual elements of the list. For example, the expression, "at least one of a, b and c," should be understood as including only a, only b, only c, both a and b, both a and c, both b and c, or all of a, b and c.

An efficient Machine Learning (ML)-driven computational workflow for the design of new deformable SE materials has been devised as shown in the present disclosure.

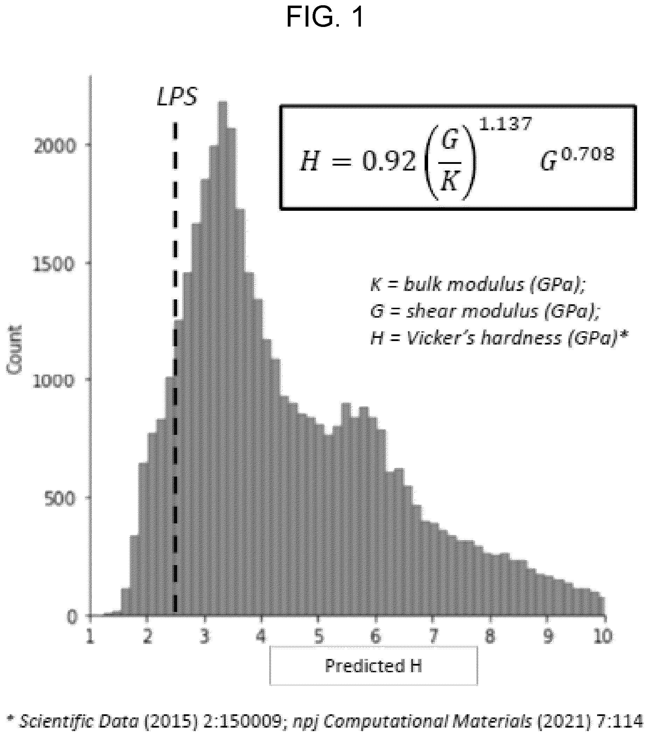

First, thousands of charge-balanced compositions by combinations of LiX and MX' binaries were generated. LiX+LiX'+MX" (~40k) and LiX+LiX'+LiX"+MX"' (>265k) combinations were considered, where the anion species X and X' are chalcogenides (O²⁻, S²⁻, Se²⁻, Te²⁻), halides (Cl⁻, F⁻, Br⁻, I⁻) or pseudo-halides (BH₄⁻, BF₄⁻, AlH₄⁻, AlF₄⁻, OH⁻, SH⁻), and M is Na, Mg, Al, K, Ca, Sc, Ti, Cu, Zn, Ga, Rb, Sr, Y, Zr, Nb, Mo, Pd, Ag, Cd, In, Sn, Cs, Ba, La, Ce, Nd, Hf, Ta, W, Pt, Au, Hg, Tl, Pb, Bi. In this regard, FIG. 1 is a graph showing the distribution of ML-predicted hardness for ~40k LiX+LiX'+MX" compositions.

Then, the hardness of all generated compositions was predicted using a ML model trained exclusively on compositional features and selected compositions with predicted hardness <=2.5GPa, that is the hardness of Li₃PS₄, used as reference material for good deformability.

Structures for the selected compositions were generated by mapping onto ~1100 prototype crystal structures from the public database AFLOW [Comp. Mat. Sci. 136, S1-S828 (2017), Comp. Mat. Sci. 161, S1-S1011 (2019), Comp. Mat. Sci. 199, 110450 (2021)]. The obtained compounds were then optimized by DFT relaxation and computationally characterized regarding thermodynamic and electrochemical stability, mechanical deformability (DFT computed hardness) and ionic conductivity (energy barriers for ionic migration estimated on the basis of the empirical Bond Valence Sum method). For some promising candidates, the conductivity was also calculated by ab initio Molecular Dynamics (AIMD).

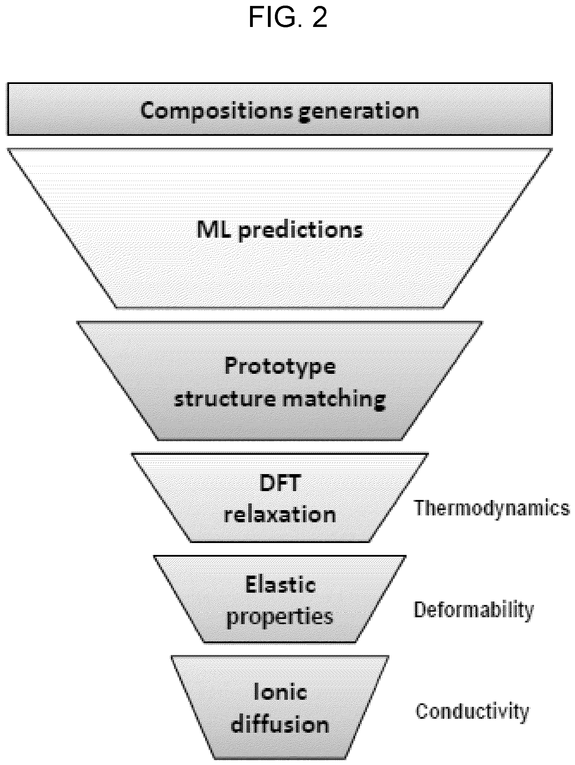

That is, compounds with ML predicted hardness <=2.5GPa (that is the hardness of Li₃PS₄, here used as a reference) were computationally characterized using DFT calculations to identify thermodynamically stable compounds and to confirm their mechanical properties. Potential ionic conductor candidates were then sorted out using the estimated migration energy barriers and in some cases also ab initio Molecular Dynamics (AIMD). The computational workflow for new deformable materials design is shown in FIG. 2.

Embodiments of the deformable halide ionic conductors of the present disclosure can be made using a standard solid-state method for making halides (e.g., in an air free environment). In this method, precursor powders are combined in a certain ratio depending on the composition of the target material. In a typical preparation, precursors may consist of a lithium halide (e.g., lithium chloride) and at least one other metal halide precursor, such as a metal fluoride, metal bromide, metal iodide, or metal chloride (e.g., silver chloride).

The precursor mixture may be mixed by a method such as ball milling or planetary milling to produce a homogeneous mixture. Mixing may be done with a suitable solvent such as ethanol, isopropanol, ethylene glycol, or acetone to assist with the uniform dispersion of the precursors.

The precursor mixture may then be heat treated to an appropriate temperature for an appropriate period of time to produce a halide powder with the desired composition and crystal structure.

Subsequently the halide powder may be compressed using a hydraulic uniaxial press to form a densely packed pellet. Heat treatment may then be applied at an appropriate temperature for an appropriate period of time to produce a dense pellet which may be used as, e.g., a solid electrolyte separator in a solid-state lithium battery cell.

An embodiment of the aforementioned solid electrolyte separator can be assembled together with a cathode active material layer and an anode active material layer to be used in an embodiment which is a solid state lithium battery comprising a cathode active material layer, an anode active material layer, and a solid electrolyte layer formed between the cathode active material layer and the anode active material layer, wherein the solid electrolyte layer comprises any of the aforementioned materials.

### EXAMPLES

Embodiments will now be illustrated by way of the following examples, which do not limit the embodiments in any way.

With the use of the computational screening described above, new deformable halide ionic conductors have been designed with good electrochemical stability against either Li metal or high voltage cathodes (or both), to be employed as anolytes or catholytes (or SEs), respectively.

Interface stability calculations show that some of the new compounds of the present disclosure are also chemically stable against commonly used oxide SEs, *i.e.,* Li₇La₃Zr₂O₁₂ (LLZO), and cathodes, *i.e.*, Li₃MnNiCoO₆ (NMC) and LiCoO₂ (LCO). The predicted chemical stability rules out side chemical reactions at the interface with such oxide phases, thus ensuring long cycle life of the SSB.

Table 1 set forth below shows new deformable ionic conductors designed with the computational workflow described in the present disclosure. The screening criteria were Eₕᵤₗₗ ≤ 30 meV/atom (thermodynamic stability), hardness ≤ 2.5 GPa, energy barrier for ionic migration ≤ 0.5 eV, and absence from Materials Project database of compounds with either the same composition or the same structure (or both).

**Table 1: New deformable ionic conductors**

| | Formula | Crystal system | Space group symbol | Eₕᵤₗₗ (meV/atom) | Reduction Voltage | Oxidation Voltage | Hardness (GPa) | Ion-migration Energy barrier (eV) |
|---|---|---|---|---|---|---|---|---|
| 0 | CsLi₂Cl₃ | orthorhombic | Cmcm | 9 | 000 | 4.34 | 1.352 | 0.413 |
| 1 | NaLi₃I₄ | orthorhombic | Pmn2_1 | 13 | 0.05 | 2.55 | 0.537 | 0.314 |
| 2 | NaLi₃Br₄ | orthorhombic | Pmn2_1 | 16 | 0.05 | 3.25 | 0.876 | 0.273 |
| 3 | NaLi₃Cl₄ | orthorhombic | Pmn2_1 | 18 | 0.05 | 3.85 | 0.989 | 0.270 |
| 4 | KLi₂F₃ | orthorhombic | Pnma | 20 | 0.45 | 5.85 | 1.497 | 0.411 |
| 5 | Li₂HfF₆ | cubic | Pa-3 | 0 | 1.06 | 6.00 | 1.600 | 0.199 |
| 6 | Li₃AgI₄ | orthorhombic | Pmn2_1 | 3 | 1.75 | 2.60 | 0.968 | 0.337 |
| 7 | Li₃SiB₃(ClF₃)₄ | cubic | P-43n | 19 | 2.10 | 4.95 | 1.574 | 0.305 |
| 8 | Li₃AgBr₄ | cubic | P-43m | 3 | 2.25 | 3.30 | 0.913 | 0.260 |
| 9 | Li₂ZnF₄ | trigonal | R-3 | 17 | 2.37 | 6.00 | 1.222 | 0.187 |
| 10 | Li₃AgCl₄ | cubic | P-43m | 0 | 2.60 | 3.80 | 0.875 | 0.242 |
| 11 | Li₃AgCl₄ | orthorhombic | Pmn2_1 | 0 | 2.60 | 3.90 | 1.060 | 0.283 |
| 12 | Li₂AgCl₃ | orthorhombic | Pnma | 0 | 2.67 | 3.73 | 0.892 | 0.232 |

The following observations can be made from the aforementioned new deformable ionic conductors designed with the computational workflow described in the present disclosure.

All of the newly designed compounds are halides, particularly chlorides and fluorides.

CsLi₂Cl₃, NaLi₃I₄, NaLi₃Br₄ and NaLi₃Cl4 are electrochemically stable vs. Li metal (red_volt ≈ 0V) and therefore usable as anolytes.

CsLi₂Cl₃ is also stable at high voltage (oxi_volt = 4.34V vs. Li/Li⁺), and can therefore be used also as a catholyte or solid electrolyte (SE) in a solid-state battery (SSB).

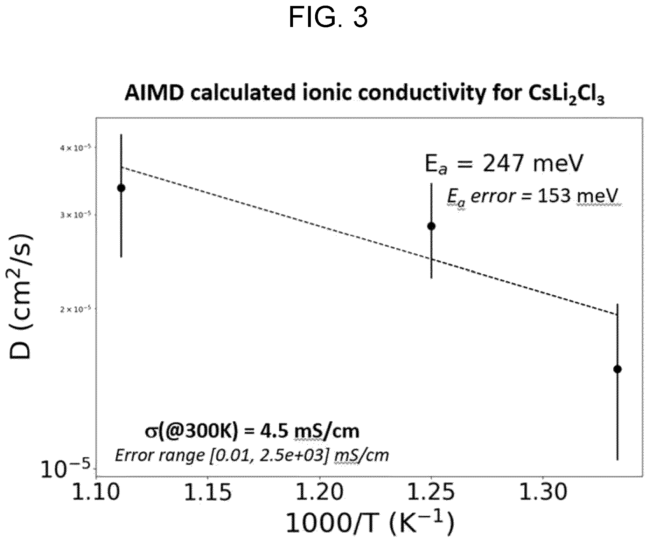

In regard to CsLi₂Cl₃, FIG. 3 is a graph showing the ab initio Molecular Dynamics (AIMD) calculated ionic conductivity for CsLi₂Cl₃.

KLi₂F₃, Li₂HfF₆, Li₃SiB₃(ClF₃)₄ and Li₂ZnF₄ are stable at high voltage (oxi_volt > 4.5V) and therefore usable as catholytes.

KLi₂F₃ is also stable down to 0.45V vs. Li/Li⁺ and might therefore be kinetically stabilized as anolyte vs. Li metal anode.

All compounds with low valence M cations are thermodynamically stable or have very low reaction energies (indicating low driving force for reaction) against oxides like LLZO, LCO and NMC (see Tables 2-4 below).

**Table 2: Predicted interface reactions against Li₇La₃Zr₂O₁₂ (LLZO)**

| | Formula | Reaction vs. LLZO | Reaction energy (eV/atom) |
|---|---|---|---|
| 0 | CsLi₂Cl₃ | - | - |
| 1 | NaLi₃I₄ | 0.5 Li₇La₃Zr₂O₁₂ + 0.5 NaLi₃I₄ -> 0.5 Li₆Zr₂O₇ + 0.5 Nal + Li₂O + 1.5 LalO | -0.015 |
| 2 | NaLi₃Br₄ | - | - |
| 3 | NaLi₃Cl₄ | - | - |
| 4 | KLi₂F₃ | - | - |
| 5 | Li₂HfF₆ | 0.3333 Li₇La₃Zr₂O₁₂ + 0.6667 Li₂HfF₆ -> 0.3333 La₂Hf₂O₇ + 0.3333 LaOF + 3.667 LiF + 0.6667 ZrO₂ | -0.165 |
| 6 | Li₃AgI₄ | 0.5 Li₇La₃Zr₂O₁₂ + 0.5 Li₃AgI₄ -> 0.5 Li₆Zr₂O₇ + 0.5 Agl + Li₂O + 1.5 LaIO | -0.012 |
| 7 | Li₃SiB₃(ClF₃)₄ | 0.4717 Li₇La₃Zr₂O₁₂ + 0.5283 Li₃SiB₃(ClF₃)₄ -> 0.2264 Li₃B₇O₁₂ + 2.094 LiF + 0.5283 ZrSiO₄ + 2.113 LiCl + 0.4151 ZrO₂ + 1.415 LaF₃ | -0.358 |
| 8 | Li₃AgBr₄ | - | - |
| 9 | Li₂ZnF₄ | 0.1667 Li₇La₃Zr₂O₁₂ + 0.8333 Li₂ZnF₄ -> 0.5 LaOF + 0.8333 ZnO + 2.833 LiF + 0.3333 ZrO₂ | -0.162 |
| 10 | Li₃AgCl₄ | 0.6667 Li₃AgCl₄ + 0.3333 Li₇La₃Zr₂O₁₂ -> 0.6667 LiAgO + 0.3333 Li₆Zr₂O₇ + 1.667 LiCl + LaClO | -0.017 |
| 11 | Li₃AgCl₄ | 0.6667 Li₃AgCl₄ + 0.3333 Li₇La₃Zr₂O₁₂ -> 0.6667 LiAgO + 0.3333 Li₆Zr₂O₇ + 1.667 LiCl + LaClO | -0.017 |
| 12 | Li₂AgCl₃ | 0.6667 Li₂AgCl₃ + 0.3333 Li₇La₃Zr₂O₁₂ -> 0.6667 LiAgO + 0.3333 Li₆Zr₂O₇ + LiCl + LaClO | -0.021 |

**Table 3: Predicted interface reaction against Li₃MnCoNiO₆ (NMC)**

| | Formula | Reaction vs. NMC | Reaction energy (eV/atom) |
|---|---|---|---|
| 0 | CsLi₂Cl₃ | - | - |
| 1 | NaLi₃I₄ | - | - |
| 2 | NaLi₃Br₄ | - | - |
| 3 | NaLi₃Cl₄ | - | - |
| 4 | KLi₂F₃ | - | - |
| 5 | Li₂HfF₆ | 0.68 Li₃MnCoNiO₆ + 0.32 Li₂HfF₆ -> 0.1275 Li₄MnCo₅O₁₂ + 0.0425 Mn₂CoO₄ + 0.125 Li₂Mn₃NiO₈ + 0.0925 Mn(Ni₃O₄)₂ + 1.92 LiF + 0.32 HfO₂ | -0.087 |
| 6 | Li₃AgI₄ | - | - |
| 7 | Li₃SiB₃(ClF₃)₄ | 0.7152 Li₃MnCoNiO₆ + 0.2848 Li₃SiB₃(ClF₃)₄ -> 0.1904 Li₂NiF₄ + 0.0894 LiClO₄ + 0.2384 Co₃(BO₃)₂ + 0.5248 NiCl₂ + 0.7152 MnO₂ + 0.1258 Li₂B₃O₄F₃ + 2.278 LiF + 0.2848 SiOz | -0.232 |
| 8 | Li₃AgBr₄ | - | - |
| 9 | Li₂ZnF₄ | 0.4853 Li₃MnCoNiO₆ + 0.5147 Li₂ZnF₄ -> 0.1276 Li₂Mn₃NiO₈ + 0.04282 Li₄MnCo₅O₁₂ + 0.01427 Zn₅Co₁₉O₃₂ + 0.4433 ZnO + 0.05961 Mn(Ni₃O₄)₂ + 2.059 LiF | -0.102 |
| 10 | Li₃AgCl₄ | - | - |
| 11 | Li₃AgCl₄ | - | - |
| 12 | Li₂AgCl₃ | - | - |

**Table 4: Predicted interface reactions against LiCoO₂ (LCO)**

| | Formula | Reaction vs. LCO | Reaction energy (eV/atom) |
|---|---|---|---|
| 0 | CsLi₂Cl₃ | - | - |
| 1 | NaLi₃I₄ | - | - |
| 2 | NaLi₃Br₄ | - | - |
| 3 | NaLi₃Cl₄ | - | - |
| 4 | KLi₂F₃ | - | - |
| 5 | Li₂HfF₆ | 0.8333 LiCoO₂ + 0.1667 Li₂HfF₆ -> 0.1667 Co₃O₄ + 0.1667 Li(CoO₂)₂ + LiF + 0.1667 HfO₂ | -0.027 |
| 6 | Li₃AgI₄ | - | - |
| 7 | Li₃SiB₃(ClF₃)₄ | 0.8491 LiCoO₂ + 0.1509 Li₃SiB₃(ClF₃)₄ -> 0.2264 Co₃(BO₃)₂ + ; 0.1509 Li₂SiF₆ + 0.1698 ClOz + 0.1698 CoCl₂ + 0.9057 LiF + ! 0.09434 LiCl ! | -0.214 |
| 8 | Li₃AgBr₄ | - | - |
| 9 | Li₂ZnF₄ | 0.3333 Li₂ZnF₄ + 0.6667 LiCoO₂ -> 0.03509 Zn₅Co₁₉O₃₂ + 0.1579 ZnO + 1.333 LiF + 0.02632 O₂ | -0.077 |
| 10 | Li₃AgCl₄ | - | - |
| 11 | Li₃AgCl₄ | - | - |
| 12 | Li₂AgCl₃ | - | - |

Thus, Tables 2-4 show the computed interface stability against oxides commonly used in SSBs, namely LLZO (SE), LCO and NMC (cathodes).

As shown above, predicted reaction energies (e_rxn) are generally low or null for compounds with low valence metals, namely, Cs⁺, Na⁺, K⁺, and Ag⁺.

The foregoing is illustrative of exemplary embodiments and is not to be construed as limiting the disclosure. Although a few exemplary embodiments have been described, those skilled in the art will readily appreciate that many modifications are possible in the above embodiments without materially departing from the disclosure.

## Claims

1. A deformable halide-based ionic conductor having one of the following formulas:
NaLi₃I₄,
NaLi₃Br₄,
NaLi₃Cl₄,
KLi₂F₃,
Li₂HfF₆,
L₁₃AgI₄,
Li₃SiB₃(ClF₃)₄,
Li₃AgBr₄,
Li₂ZnF₄,
wherein the Li₂ZnF₄ has a trigonal crystal structure with space group R-3,
Li₃AgCl₄,
or
Li₂AgCl₃.

2. The deformable halide-based ionic conductor according to claim 1, wherein the deformable halide-based ionic conductor has one of the following formulas:
NaLi₃I₄,
NaLi₃Br₄,
NaLi₃Cl₄,
KLi₂F₃,
Li₂HfF₆,
Li₃AgI₄,
Li₃SiB₃(ClF₃)₄,
Li₃AgBr₄,
Li₃AgCl₄, or
Li₂AgCl₃.

3. A catholyte comprising a deformable halide-based ionic conductor having one of the following formulas:
CsLi₂Cl₃,
wherein the CsLi₂Cl₃ has an orthorhombic crystal structure,
KLi₂F₃,
Li₂HfF₆,
Li₃SiB₃(ClF₃)₄,
Li₃AgBr₄,
Li₂ZnF₄,
Li₃AgCl₄, or
Li₂AgCl₃.

4. The catholyte according to claim 3, wherein the deformable halide-based ionic conductor has the formula CsLi₂Cl₃, wherein the CsLi₂Cl₃ has an orthorhombic crystal structure.

5. The catholyte according to claim 3, wherein the deformable halide-based ionic conductor has the formula KLi₂F₃.

6. The catholyte according to claim 3, wherein the deformable halide-based ionic conductor has the formula Li₂HfF₆.

7. The catholyte according to claim 3, wherein the deformable halide-based ionic conductor has the formula Li₃SiB₃(ClF₃)₄.

8. The catholyte according to claim 3, wherein the deformable halide-based ionic conductor has the formula Li₂ZnF₄.

9. A solid electrolyte separator comprising a deformable halide-based ionic conductor having one of the following formulas:
CsLi₂Cl₃,
wherein the CsLi₂Cl₃ has an orthorhombic crystal structure,
NaLi₃I₄,
NaLi₃Br₄,
NaLi₃Cl₄,
KLi₂F₃,
Li₂HfF₆,
Li₃AgI₄,
Li₃SiB₃(ClF₃)₄,
Li₃AgBr₄,
Li₂ZnF₄,
Li₃AgCl₄, or
Li₂AgCl₃.

10. The solid electrolyte separator according to claim 9, comprising a solid electrolyte having the formula CsLi₂Cl₃, wherein the CsLi₂Cl₃ has an orthorhombic crystal structure.

11. A solid state battery comprising an anode, a cathode, and a solid electrolyte separator, wherein the solid state battery comprises a catholyte according to one of claims 3 to 8.

12. A solid state battery comprising an anode, a cathode, and a solid electrolyte separator according to claim 9 or 10.
